# EUROPEAN PATENT APPLICATION

(11) **EP 4 838 253 A1**
(43) Date of publication of application: **11.11.2026**
(21) Application number: 26176442.7
(22) Date of filing: 05.05.2026
(51) Int. Cl.: G01S 7/40, G01S 7/41, G01S 13/42, G01S 13/87, G01S 13/88

(54) **METHOD FOR DETECTING A MASKING OBJECT THAT OBSTRUCTS A FIELD OF VIEW OF A RADAR**

(30) Priority: 06.05.2025 IT 202500010092
(71) Applicant: Inxpect S.p.A., 25131 Brescia (BS) (IT)
(72) Inventor: Belotti Cassa, Michele, 25131 Brescia BS (IT)
(74) Representative: Perani & Partners S.p.A.

(57) **Abstract**

A method for detecting a masking object (4), which obstructs a field of view (2) of a radar sensor (1), comprises acquiring for a plurality of acquisition cycles variable-range signal profiles relating to distinct pairs of transmission and reception antennas (TX, RX). For at least one masking distance (Dm), fixed-range intensity matrices are obtained for the current cycle and for a reference cycle, wherein each fixed-range intensity matrix comprises intensity values, extrapolated from the variable-range profiles of different antennas at the masking distance (Dm). For the current cycle and the reference cycle, a fixed-range signature is calculated by means of a Fourier transform of the fixed-range intensity matrix. It is then determined that a masking object (4) is present at the masking distance when the fixed-range signatures for the current and reference cycles differ by at least a predetermined threshold.

## Description

### FIELD OF THE INVENTION

The present invention is developed in the technical field of detecting masking objects that obstruct a field of view of a radar sensor. The subject matter of the present invention finds useful application in the field of occupational safety, for example in industrial areas where machinery with a more or less high degree of danger may be present or in spaces where meticulous control of the presence of personnel is required.

### Prior art

Radar sensors in industrial areas are known in the state of the art. In particular, in the presence of plants with dangerous machinery or tools, the use of such sensors is becoming increasingly significant, not only for safeguarding workers but also to avoid possible risks of breakage or malfunction of the plants themselves.

In fact, the radars used are capable of accurately detecting the presence of people within their fields of view, which can be placed, for example, to monitor predetermined areas around a plant or a machine, or the access ways to their environments. Since radio waves are indifferent to the presence of light, dust, fine dust, or any other environmental factor, radar sensors are generally preferred over other types of detection sensors, such as infrared sensors.

During their activity, radar sensors detect the presence of one or more people in the proximity of the plant and can therefore send an alarm and immediate shutdown signal to the plant itself. However, it is possible that an object, placed in front of the radar, may obstruct its field of view, putting the bulk of the field of view in a signal shadow and leading the radar sensor to no longer be able to detect the presence of people in the area in proximity to the plant or in the space of interest, consequently not recognizing dangerous situations due to the failed detection of people.

This, in fact, could cause more or less serious injuries to operators who are not detected by the radar sensor, making the plant unreliable and unsafe.

The masking object, moreover, could be ignored as it is often located in positions different from the regions of interest where the radar detects and signals the targets.

The prior document EP 3748391 describes an example of processing useful for identifying the presence of a masking object, in the case of a monostatic radar. The response to masking is not immediate, as the consistency and convergence of the signals indicative of masking are verified over several successive cycles, to prevent the alarm from being triggered based on a few signal values related to a single cycle, which could be distorted for other reasons, for example thermal drifts.

### Object of the invention

It is an object of the present invention to provide an alternative method for detecting the presence of masking objects that obstruct the field of view of a radar sensor, for the case of a larger number of transmission and reception antennas compared to EP 3748391.

It is also an object of the invention to detect masking conditions more rapidly, and with a low computational load.

These and further objects will be substantially achieved by a method having the technical characteristics described in one or more of the appended claims.

### SUMMARY OF THE INVENTION

The present invention relates to a method for detecting the presence of a masking object that obstructs the field of view of a radar sensor in a current acquisition cycle.

The method of the present invention comprises acquiring a plurality of variable-range signal profiles in a field of view of the radar sensor for a predetermined number of acquisition cycles. The acquisition cycles comprise at least one reference cycle and the current cycle, subsequent to the reference cycle, wherein, in the reference cycle, the field of view is free of masking objects.

In particular, the radar sensor comprises transmission and reception antennas configured to transmit and receive radar signals in the field of view, the transmission and reception antennas being arranged according to a predetermined spatial distribution.

The step of acquiring a plurality of variable-range profiles comprises, for each acquisition cycle, transmitting at least one radar transmission signal, with a time-modulated transmission frequency, and receiving reception signals, originating from the reflection of each transmission signal in the field of view.

The step of acquiring a plurality of variable-range profiles further comprises obtaining a matrix of variable-range signal profiles, wherein each variable-range profile is obtained by processing a predetermined combination of a transmission signal and a respective reception signal, wherein distinct variable-range profiles of the matrix are obtained from transmission and reception signals related to distinct pairs of transmission and reception antennas of the predetermined spatial distribution, each variable-range profile comprising a set of reflected radar signal intensities as a function of a set of distances from the radar sensor.

Subsequently, for one or more predetermined masking distances, the method provides for obtaining a current fixed-range intensity matrix for the current cycle, and a reference fixed-range intensity matrix for the at least one reference cycle, wherein, for each specific acquisition cycle, each fixed-range intensity matrix comprises a plurality of intensity values, each as a single value extrapolated, in the specific acquisition cycle, from a respective variable-range profile of the matrix, at the respective masking distance, or as a combination of single values extrapolated, in the specific acquisition cycle and in at least one further acquisition cycle, from variable-range profiles of the relative matrices, at the respective masking distance.

A feature of the present invention is to calculate a current fixed-range signature, wherein calculating the current fixed-range signature comprises a Fourier transform of the current fixed-range intensity matrix. Furthermore, the method provides for calculating a reference fixed-range signature, wherein calculating the reference fixed-range signature comprises a Fourier transform of the reference fixed-range profile matrix.

Finally, the method provides for determining that a masking object is present at a masking distance when the current and reference fixed-range signatures differ by at least a predetermined threshold.

### Advantages of the invention

Thanks to the present invention, it is possible to obtain a method capable of detecting the presence of masking objects that obstruct the field of view of a radar sensor with a certain spatial distribution of antennas, which allows for the identification of different pairs of transmission antennas and reception antennas, for example MIMO, SIMO, or MISO radar.

The use of fixed-range signatures allows for an overview of the environment at the distance where the risk of obstruction by masking objects is expected. Being a comparison based on multiple signal values related to different directions, the comparison is more robust against false masking conditions, and the masking alarm can be triggered earlier, in a single cycle.

Preferably, the calculation of the fixed-range signature is based on a Fourier transform and is performed without super-resolution algorithms, to maintain a low computational load, unlike the normal calculation of the direction of the targets.

In an advantageous embodiment, thermal drifts can be compensated for with an equalization that is concluded in the current cycle, without resorting to slower convergence checks.

### BRIEF DESCRIPTION OF THE DRAWINGS

The advantages and technical characteristics will be amply clarified by the following detailed description of a method for detecting a masking object that obstructs the field of view of a radar sensor, in accordance with a preferred and non-limiting embodiment, together with the set of drawings in which:
- figure 1 shows a schematic view of a configuration in use of a radar sensor according to the present invention in accordance with an embodiment,
- figure 2 shows a schematic view of a detail of the method in accordance with an embodiment.

### DETAILED DESCRIPTION

The subject of the present invention is a method for detecting a masking object 4 that obstructs a field of view 2 of a radar sensor 1 in a current acquisition cycle.

It should be noted that by the term "masking objects" the Applicant means to intend any body or object that, if placed in front of the radar sensor 1, at a short distance, interferes with the correct detection activity of a target T in one or more regions of interest 3 behind the masking object by the radar sensor 1 itself.

The radar sensor 1 is capable of detecting the presence of people or other targets T and of determining spatial coordinates representative of their position within a predetermined field of view 2, having a maximum depth, and maximum angular widths in terms of azimuth and elevation angles. However, in common use, the radar sensor 1 is set up to memorize one or more regions of interest 3 in the field of view 2, and to exclusively signal targets T that are within a region of interest 3. This signal can be used, for example, to trigger an alarm and the possible immediate shutdown of the plant. The targets T detected in the field of view are thus filtered, by comparing their spatial coordinates with the limits defining the region(s) of interest 3. The regions of interest 3 can be set in a configuration and/or installation phase of the radar sensor 1, for example before the reference cycle described below.

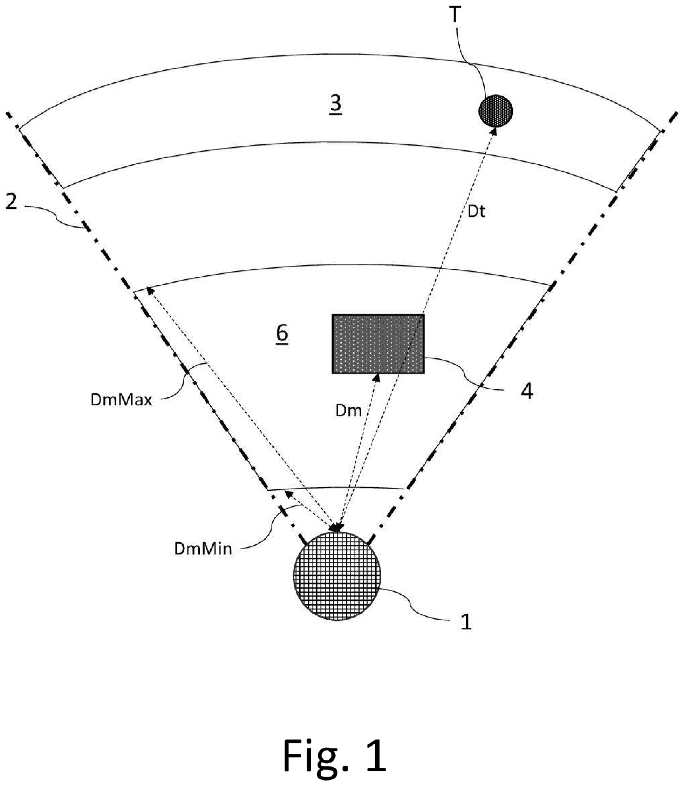

As shown in figure 1, in the presence of a masking object 4, the activity of the radar sensor 1 would be compromised as it would not be able to detect the presence of dangerous situations such as to require the shutdown of the plant. In other words, one would have a "blind" radar sensor 1.

In a known manner, the radar sensor 1 comprises transmission TX and reception RX antennas configured to transmit and receive radar signals in the field of view 2. Such transmission TX and reception RX antennas are arranged according to a predefined spatial distribution. The plurality of antennas can be arranged on a printed circuit board (PCB).

Preferably, the radar sensor 1 is a MIMO (multiple input, multiple output) radar sensor 1 comprising a plurality of transmission TX antennas and a plurality of reception RX antennas arranged in accordance with a predefined spatial distribution. For example, the transmission TX antennas can be arranged linearly, for example on a single line (an array) or on multiple parallel lines (multiple arrays). Likewise, this distribution can also be applied to the reception RX antennas.

The radar sensor 1 can have a single array of transmission TX antennas and a single array of reception RX antennas arranged along parallel lines (one-dimensional MIMO radar sensor 1).

In a preferred embodiment, the array of transmission TX antennas is arranged transversally with respect to the array of reception RX antennas (two-dimensional MIMO radar sensor 1). For example, the transmission TX antennas can be arranged along a horizontal array and the reception RX antennas along a vertical array, so as to have thearray of transmission TX antennas arranged perpendicularly with respect to the array of reception RX antennas.

It should be noted that the number of antennas or of reception RX and transmission arrays can be different. The greater the number of antennas in one direction, the greater the angular resolution in that direction will be, for example in azimuth or elevation.

It is worth noting that the radar sensor 1 of the present invention can also be a SIMO (single input, multiple output) radar sensor 1, comprising a single transmission TX antenna and a plurality of reception RX antennas, or a MISO (multiple input, single output) radar sensor 1, comprising a plurality of transmission TX antennas and a single reception RX antenna, and that the method described below, although referring to a MIMO radar sensor 1, can also be applied to the types of radar previously mentioned.

The method of the present invention comprises acquiring, by means of the radar sensor 1, a plurality of variable-range signal profiles by performing a plurality of acquisition cycles. The acquisition cycles comprise at least one reference cycle and a current cycle.

The reference cycle is a cycle that is performed by the radar sensor 1 when the field of view 2 of the radar sensor 1 is free of masking objects 4. In other words, the reference cycle is an acquisition cycle that is performed in "ideal" conditions, i.e., eliminating the possibility of masking of the field of view 2.

The current cycle is the cycle currently being performed by the radar sensor 1, or the last one just completed, and is therefore subsequent to the reference cycle(s). Between the reference cycle and the current cycle, any number of other already completed cycles may be present. These intermediate cycles have from time to time been the current cycle, and in them the same processing described here for the current cycle has been performed.

The method of the invention comprises, for each acquisition cycle, including the reference cycle and the current cycle, acquiring, by means of the radar sensor 1, a plurality of variable-range signal profiles. The acquisition of variable-range profiles is known per se, and is articulated in the steps described below.

The step of acquiring a plurality of variable-range profiles comprises, for each acquisition cycle considered, transmitting at least one radar transmission signal with a time-modulated transmission frequency (fc), i.e., a chirp.

Preferably, each chirp has a linearly time-modulated frequency, for example it is a signal of the FMCW (frequency-modulated continuous wave) type.

In alternative embodiments, the radar sensor 1 can be configured to send transmission signals with non-linear modulations, for example signals of the SFCW (stepped-frequency continuous wave) type.

Multiple chirps transmitted by the same transmission antenna of the TX transmission array can be grouped into a frame.

It should be noted that the at least one signal that is transmitted in each cycle can be a single transmission signal or multiple transmission signals, depending on the type of radar sensor 1. By way of example, in the case of a SIMO radar sensor, having a single transmission TX antenna, the at least one transmission signal will be a single transmission signal for each acquisition cycle. Differently, in the case of a MISO or MIMO radar, all the antennas constituting the array of transmission TX antennas transmit a respective transmission signal within the same acquisition cycle.

In the preferred embodiment, to avoid interference between the different transmitted radar signals, the transmissions from different antennas do not occur simultaneously, but in sequence (time division multiplexing). A person skilled in the art, however, may use other known interference mitigation techniques, and thus allow simultaneous transmissions.

Subsequently, the step of acquiring a plurality of variable-range profiles comprises receiving reception signals, originating from the reflection of each transmission signal in the field of view 2. In detail, in the case of MISO-type radar sensors 1, each reflected transmission signal is received by the single reception RX antenna. Differently, in SIMO and MIMO type radar sensors 1, each reflected transmission signal is received by each reception antenna of the RX reception array.

Due to the time-modulated frequency and the propagation time of the radar signal, the reflected signal has a frequency modulated in the same way but with a time delay due to the reflection. Therefore, the time-dependent behavior of the transmission frequency is equal to the time-dependent behavior of the reception frequency, but the latter is shifted by a temporal variation Δt.

Subsequent to the step of receiving reception signals, the method comprises combining each reception signal with the corresponding transmission signal, and processing this combination.

In detail, the reception signal is mixed with the corresponding transmission signal, thus giving rise to a baseband signal having as frequency a difference between the transmission frequency and the reception frequency for each instant of time.

The method subsequently provides for obtaining the variable-range profiles, each by processing each signal obtained from the previously described mix.

In particular, each variable-range profile comprises a set of intensity values as a function of a set of distance values. The set of distance values corresponds in a known manner to a set of frequencies of the baseband signal.

Each variable-range profile is preferably obtained by means of a Fourier transform (for example, FFT) of the respective predetermined combination of a transmission signal and a respective reception signal.

In a known manner, the variable-range profile originating from the combination of the signal transmitted by a transmission TX antenna and the reflected signal received by a reception RX antenna is equivalent to a variable-range profile that would be virtually obtainable for a monostatic radar positioned at the midpoint between the transmission TX antenna and the reception RX antenna. Thus, the spatial distribution of transmission TX and reception RX antennas is equivalent to a (different) spatial distribution of virtual monostatic radars, generally more numerous than the transmission TX and reception RX antennas, where each virtual monostatic radar corresponds to a pair identified by a transmission TX antenna and a reception RX antenna.

It should be noted that, in accordance with the method of the present invention, the previously described steps are repeated for each distinct pair of antennas comprising a single transmission TX antenna and a single reception RX antenna, thus creating a matrix 5 of variable-range profiles. In other words, distinct variable-range profiles, obtained from transmission and reception signals related to distinct pairs of transmission TX and reception RX antennas of the predetermined spatial distribution, are stored and organized in a matrix 5 of variable-range profiles.

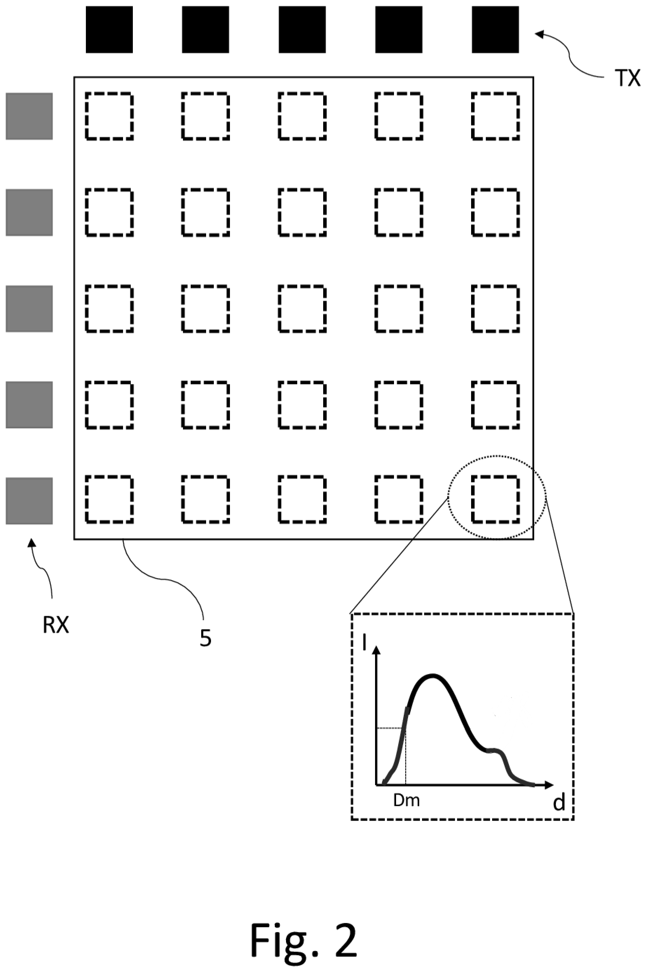

As shown in the embodiment of figure 2, the matrix 5 of variable-range profiles therefore comprises a plurality of rows and columns, wherein each row comprises variable-range profiles related to a single reception RX antenna and distinct transmission TX antennas, and each column comprises variable-range profiles related to a single transmission TX antenna and distinct reception RX antennas.

Alternatively, each row can comprise variable-range profiles related to a single transmission TX antenna and distinct reception RX antennas, and each column can comprise variable-range profiles related to a single reception RX antenna and distinct transmission TX antennas.

In other words, each variable-range profile of the matrix 5 can be associated with a distinct virtual monostatic radar which, in the embodiment shown in figure 2, can also be arranged in a matrix. In fact, in the preferred form of the invention, the array of transmission TX antennas and the array of reception RX antennas are positioned perpendicularly to each other. Advantageously, in this way, the spatial arrangement of the virtual elements (virtual monostatic radars) corresponds to the same spatial organization of the matrix 5.

In a known manner, the number of virtual elements, and therefore of virtual monostatic radars, is given by the multiplication of the number of antennas of the transmission TX array and the number of antennas of the reception RX array.

For example, considering then the first column of virtual elements, the first virtual element represents the combination of the signal transmitted by the first reception TX antenna and the signal received by the first reception RX antenna, the second virtual element represents the combination of the signal transmitted by the first transmission TX antenna and the signal received by the second reception RX antenna, and so on.

It is worth noting that, in the case where the radar sensor 1 was of MISO or SIMO type, the matrix 5 of variable-range profiles would correspond to a vector, thus to a matrix 5 with a single row or a single column.

When a transmission antenna transmits a radar signal into the field of view 2, this signal is reflected by the surrounding environment and received by each reception RX antenna of the array of reception RX antennas, with reception RX antennas distributed vertically. Since each antenna is spaced by a predetermined distance from the adjacent reception RX antenna, the reflected signal will be received with a different time interval and with a different signal intensity for each reception RX antenna. This allows the radar sensor 1 to perform a scan along the vertical direction, determining the angular coordinates in elevation of the masking object 4.

This procedure, for example in the case of the MIMO radar sensor 1, is repeated for each antenna of the plurality of transmission TX antennas distributed horizontally, to perform a scan along the horizontal direction, determining the angular coordinates in azimuth of the masking object 4.

Furthermore, the method comprises, for each of one or more predetermined masking distances Dm, obtaining a current fixed-range intensity matrix for the current cycle, and a reference fixed-range intensity matrix for the at least one reference cycle.

In a preferred form, it is intended that, for each specific acquisition cycle, each fixed-range intensity matrix comprises a plurality of intensity values, each as a single value extrapolated, in the specific acquisition cycle, from a respective variable-range profile of the matrix 5, at a respective masking distance Dm. Thus, the fixed-range intensity matrix has the same number of rows and columns as the matrix of variable-range profiles 5, but each element of the fixed-range intensity matrix is a single intensity value, whereas for the matrix of variable-range profiles it had entire intensity profiles as elements.

Preferably, the masking distance Dm corresponds to a predetermined distance between the radar sensor 1 and a predetermined point within the field of view 2 of the radar sensor 1. The point within the field of view 2 is interposed between the radar sensor 1 and the region of interest.

Thus, as visible in figure 1, the radar sensor 1 can be configured to recognize the presence of masking objects 4 within a masking region 6 inside the field of view 2 of the radar sensor 1. This masking region 6 is comprised between a minimum masking distance DmMin and a maximum masking distance DmMax. In other words, the radar sensor 1 is thus able to identify the presence of a masking object if the latter is placed within the masking region 6 and therefore placed at one or more masking distances Dm comprised between the minimum and maximum masking distances DmMin, DmMax. It is worth noting that the latter can be modified according to the needs of a user.

In fact, the masking object 4, if present, obstructs the field of view 2 of the radar sensor 1 by interposing itself between the radar sensor 1 itself and the region of interest 3. It should be noted that, the closer the masking object 4 is to the radar sensor 1, the more its field of view 2 will be obstructed.

It is worth noting that multiple masking distances Dm can be preset, depending on the requested needs.

In other words, for each detection cycle, one or more masking distances Dm are selected, i.e., distances (or frequencies) at which it is plausible that there is a masking object 4. Once these distances are established, for each masking distance Dm, each variable-range profile of the matrix 5 is analyzed, extrapolating the intensity value corresponding to that distance. The set of single intensity values taken, for a preset masking distance Dm, from all the different variable-range profiles of the matrix 5, defines the fixed-range intensity matrix of that masking distance Dm.

As previously specified, it should be noted that this step can be performed for one, two or more masking distances Dm, consequently obtaining a corresponding number of fixed-range intensity matrices.

Alternatively, each intensity value of the fixed-range intensity matrix can be obtained as a combination of single values extrapolated from multiple variable-range profile matrices, for multiple acquisition cycles. These generally include the specific acquisition cycle for which the fixed-range intensity matrix is being calculated (e.g., the current cycle, or the reference cycle), and at least one further acquisition cycle (e.g., a preceding cycle). Also in this case, the values to be combined are extrapolated, from variable-range profiles of the relative matrices 5, at the considered masking distance Dm.

In other words, in accordance with an embodiment of the method of the present invention, each fixed-range intensity matrix can be calculated over a plurality of reference cycles, i.e., over a plurality of chirps belonging to a single or multiple frames. Therefore, considering a masking distance Dm, the values of the reference fixed-range intensity matrix are calculated by averaging the intensity values, corresponding to that masking distance Dm, extrapolated from the corresponding variable-range profiles of the matrix 5 for a predetermined number of reference cycles or chirps.

By way of example, consider a number of reference cycles equal to N. During the first reference cycle, the radar sensor 1 via each transmission TX antenna emits a chirp signal. In other words, each transmission TX antenna, in succession with respect to the others, emits a chirp signal within the same acquisition cycle.

Subsequently, the emitted radar signal is reflected and received by the reception RX antennas and, undergoing processing analogous to what was previously described, the matrix 5 of variable-range profiles is obtained. This matrix 5 is thus associated with the first reference cycle. These steps are thus repeated for a number N of reference cycles, obtaining, for each reference cycle, a matrix 5 comprising a plurality of variable-range profiles.

In each matrix 5, for each variable-range profile obtained from a specific pair of transmission TX and reception RX antennas in the different reference cycles, the intensity values corresponding to one or more masking distances Dm are extrapolated. For each masking distance Dm, these values are then averaged over the total number of reference cycles N, thus obtaining, for each masking distance Dm, a fixed-range intensity matrix averaged over the number of reference cycles N.

In one embodiment, the plurality of reference cycles comprises consecutive acquisition cycles. For example, the fixed-range intensity matrices are calculated considering the intensity values obtained from consecutive chirps within a frame and averaged over the number of chirps within the frame.

In alternative embodiments, the reference cycles are interspersed with other acquisition cycles. For example, the fixed-range intensity matrices are calculated considering the intensity values obtained from one or more chirps within the same frame or from distinct frames and averaged over the number of considered chirps.

For example, it is possible to calculate the fixed-range intensity matrices considering only the first chirp of a sequence within a frame, over a number N of distinct frames.

Subsequent to the step of obtaining a current fixed-range intensity matrix for the current cycle, and a reference fixed-range intensity matrix for the at least one reference cycle, the method of the present invention comprises also calculating a current fixed-range signature and a reference fixed-range signature.

Calculating the current fixed-range signature comprises calculating a Fourier transform of the current fixed-range intensity matrix, and similarly calculating the reference fixed-range signature comprises calculating a Fourier transform of the reference fixed-range intensity matrix.

As a result of the Fourier transform, it is possible to obtain harmonic components constituting the considered fixed-range profile.

Finally, the method of the present invention comprises determining that a masking object 4 is present at a masking distance Dm when the current and reference fixed-range signatures differ by at least a predetermined threshold.

In a preferred embodiment, the step of determining that a masking object 4 is present at a masking distance Dm comprises performing a difference in absolute value between fixed-range signatures related to the masking distance Dm for the reference cycle and fixed-range signatures related to the masking distance Dm for the current cycle. In other words, a point-by-point difference is performed between the current fixed-range signature and the reference fixed-range signature, i.e., a difference between values with corresponding positions in the matrices, thus obtaining aresultant signature. In accordance with the method of the present invention, if at least one point of the resultant signature exceeds the predetermined threshold, the presence of a masking object 4 is detected.

In alternative embodiments, the step of determining that a masking object 4 is present at a masking distance Dm can comprise calculating a ratio between fixed-range signatures related to the masking distance Dm for the reference cycle and fixed-range signatures related to the masking distance Dm for the current cycle.

In this way, the described method allows for recognizing when a masking object 4 is present that is obstructing the field of view 2 of the radar sensor 1. In fact, by comparing the fixed-range profile(s) calculated in the current cycle with the one(s) calculated in the reference cycle, the radar sensor 1 can recognize that, at the masking distance, the situation has significantly changed with respect to the reference cycles. As previously specified, the reference cycles represent an ideal situation in which no masking objects 4 are present that obstruct the field of view 2, thus allowing the radar sensor 1 to recognize and detect individuals or targets T in proximity to the areas of interest 3, for example in proximity to a machine or a plant.

Having thus obtained one or more reference fixed-range signatures, for each masking distance Dm, the radar sensor 1, by means of a processing unit, is able to recognize during a current acquisition cycle an anomalous situation, i.e., a situation in which the current fixed-range signatures, for the same masking distances Dm, differ by a predetermined threshold from the reference signatures, thus giving an indication of the fact that the radar sensor 1 is in fact "blind" and therefore is not able to detect and recognize individuals in the regions of interest 3.

At the moment in which this anomalous situation is verified, the radar sensor 1 is therefore not able to recognize possible dangers in the areas of interest. Therefore, in accordance with a preferred aspect, the radar sensor 1 is configured to send an alarm signal, following which, the operation of the machinery or the plant is interrupted, further indicating the presence of a masking object 4 that obstructs the field of view 2 of the radar sensor 1. Preferably, the alarm issued in the case of detection of a masking object 4 is a different alarm from the one used for a processing aimed at determining the detection of targets T within the regions of interest 3. In this way, it becomes immediate for a technician or a worker to understand whether the alarm issued by the radar sensor 1 refers to a masking object 4 or a target T in the regions of interest 3.

Preferably, the method also comprises the further step of detecting, in the current acquisition cycle, the presence of one or more targets T, such as workers or personnel, within the field of view 2 and more precisely in the one or more regions of interest 3. As previously specified, the regions of interest 3 are portions of the field of view 2 of the radar sensor 1, generally adjacent to entry/exit zones or to dangerous machinery, which are constantly monitored by the radar sensor 1 itself.

It is worth noting that the radar sensor 1 is preferably configured to perform both a processing, in accordance with the method previously described, for the detection of a masking object 4 (anti-masking processing), and a processing to detect the presence of targets T in the areas of interest 3 (detection processing).

The detection processing can also comprise, in a known manner, the calculation of fixed-range matrices, not only for the masking distances, but for the entire field of view, or only for the distances at which one or more regions of interest are located.

Always in a known manner, the detection processing can comprise determining a direction angle of each target T by means of a known super-resolution algorithm, which can comprise a Fourier transform.

Known examples of super-resolution algorithms are Capon and Music. Super-resolution algorithms generally comprise, before the Fourier transform, an intermediate phase of increasing the detection resolution, with respect to the native resolution of the transmission TX and reception RX array. This is the resolution given, in one direction, by the number of transmission TX antennas, and in another direction, by the number of reception RX antennas, and therefore also corresponds to the resolution of the fixed-range intensity matrices. The increase in resolution can be obtained by exploiting signal processing techniques, such as padding, in the case of a two-dimensional antenna array, or interpolation, in the case of a one-dimensional antenna array, and possible variants of the latter.

The Fourier transform is then applied to a resolution-augmented matrix obtained by increasing the resolution of a corresponding fixed-range intensity matrix. The resolution-augmented matrix will have an increased number of rows and columns.

On the contrary, in the anti-masking processing, the signature is obtained exclusively by means of a Fourier transform of the fixed-range intensity matrix of interest, without super-resolution techniques to contain the computational load.

This allows, in fact, to obtain, for the detection processing, a higher resolution in azimuth and elevation, for example in the order of 1°, compared to that obtained in the anti-masking processing, for example in the order of 45° in the case of 4 transmission TX antennas and 4 reception RX antennas.

Thus, in the processing performed for the anti-masking, the step of calculating a current fixed-range signature and a reference fixed-range signature by means of a Fourier transform, is performed directly following the calculation of the fixed-range matrix, without either interpolation, in the case of a one-dimensional antenna array (e.g., 1xN), or padding, in the case of a two-dimensional antenna array (e.g., NxN), thus exploiting an angular resolution such as to identify a masking object 4 within the field of view 2, but not sufficiently high to accurately estimate the direction of arrival (DOA) of the latter.

However, it is worth noting that the current fixed-range signature for anti-masking, although it uses a lower resolution, is advantageously calculated in relatively shorter times and with a lower computational effort compared to the current fixed-range signature used for the detection of targets T. This therefore allows to quickly obtain information on the correct visibility of the radar sensor 1, detecting not necessarily the exact position, but the presence or absence of a masking object 4 within the field of view 2 of the radar sensor 1.

According to a preferred aspect of the present invention, in the anti-masking processing, the step of calculating the current fixed-range signature comprises multiplying the Fourier transform of the current fixed-range intensity matrix by an equalization coefficient. The equalization coefficient thus allows to align a mean of one or more current fixed-range profiles to a mean of one or more corresponding reference fixed-range profiles.

An advantage deriving from what has been said consists in compensating for measurement errors that can be caused by the thermal drift of the electronic components constituting the radar sensor 1. In addition, this equalization can be done cycle by cycle, without verifying for example if there is a temporal convergence, thus providing an immediate equalized result. In fact, due to the increase in temperature due to the continuous operation of the radar sensor 1, it is customary for an error to be introduced into the measurement of a signal, the larger the more the electronic components are sensitive to the effects of temperature.

Preferably, the equalization coefficient is obtained by means of the step of computing, both for the reference cycle and for the current cycle, respective means of the intensity values for the respective fixed-range intensity matrix or for the fixed-range intensity matrices related to distinct masking distances Dm. In other words, for a certain cycle, a single mean of the values of all the fixed-range intensity matrices of all the masking distances Dm can be calculated, or separate means can be calculated for fixed-range intensity matrices related to different masking distances Dm. Subsequent to the calculation of these means, the equalization coefficient is obtained by means of the ratio between the mean computed in the reference cycle and the mean computed in the current cycle.

## Claims

1. A method for detecting a masking object (4) that obstructs a field of view (2) of a radar sensor (1) in a current acquisition cycle, comprising:
- acquiring, by means of the radar sensor (1), a plurality of variable-range signal profiles in a field of view (2) of the radar sensor (1) for a predetermined number of acquisition cycles, wherein the acquisition cycles comprise at least one reference cycle and the current cycle, subsequent to the reference cycle, wherein, in the reference cycle, the field of view (2) is free of masking objects (4),
wherein the radar sensor (1) is a MIMO, MISO or SIMO radar sensor (1) and comprises transmission (TX) and reception (RX) antennas configured to transmit and receive radar signals in the field of view (2), the transmission (TX) and reception (RX) antennas being arranged according to a predefined spatial distribution,
wherein acquiring a plurality of variable-range profiles comprises, for each acquisition cycle:
- transmitting at least one radar transmission signal with a time-modulated transmission frequency,
- receiving reception signals, originating from the reflection of each transmission signal in the field of view (2),
- obtaining a matrix (5) of variable-range signal profiles, wherein each variable-range profile is obtained by processing a predetermined combination of a transmission signal and a respective reception signal, wherein distinct variable-range profiles of the matrix (5) are obtained from transmission and reception signals related to distinct pairs of transmission (TX) and reception (RX) antennas of the predetermined spatial distribution, each variable-range profile comprising a set of reflected radar signal intensities as a function of a set of distances from the radar sensor (1),
- for each of one or more predetermined masking distances (Dm), obtaining a current fixed-range intensity matrix for the current cycle, and a reference fixed-range intensity matrix for the at least one reference cycle, wherein, for each specific acquisition cycle, each fixed-range intensity matrix comprises a plurality of intensity values, each as a single value extrapolated, in the specific acquisition cycle, from a respective variable-range profile of the matrix of variable-range profiles (5), at the respective masking distance (Dm), or as a combination of single values extrapolated, in the specific acquisition cycle and in at least one further acquisition cycle, from variable-range profiles of the relative matrices of variable-range profiles, at the respective masking distance (Dm),
**characterized in that it comprises**:
- calculating a current fixed-range signature, wherein calculating the current fixed-range signature comprises a Fourier transform of the current fixed-range intensity matrix,
- calculating a reference fixed-range signature, wherein calculating the reference fixed-range signature comprises a Fourier transform of the reference fixed-range intensity matrix,
- determining that a masking object (4) is present at a masking distance (Dm) when the current and reference fixed-range signatures differ by at least a predetermined threshold.

2. Method according to claim 1, wherein:
- the acquisition cycles comprise a plurality of reference cycles and the current cycle,
- the intensity values of the reference fixed-range intensity matrix are each an average of single values extrapolated, in the plurality of reference cycles, from variable-range profiles of the relative matrices, at the respective masking distance (Dm).

3. Method according to claim 2, wherein the plurality of reference cycles are consecutive acquisition cycles or acquisition cycles interspersed with other acquisition cycles.

4. Method according to any one of the preceding claims, wherein determining that a masking object (4) is present at a masking distance (Dm) comprises calculating a difference in absolute value between the fixed-range signature related to the masking distance (Dm) for the reference cycle and the fixed-range signature related to the masking distance (Dm) for the current cycle.

5. Method according to any one of the preceding claims, wherein calculating the current fixed-range signature comprises multiplying the Fourier transform of the current fixed-range intensity matrix by an equalization coefficient, such as to align a mean of one or more current fixed-range intensity matrices to a mean of one or more corresponding reference fixed-range intensity matrices.

6. Method according to claim 5, wherein the equalization coefficient is obtained by:
- calculating, for the reference cycle and for the current cycle, respective means of the intensity values for respective single fixed-range intensity matrices or for multiple fixed-range intensity matrices related to distinct masking distances (Dm),
- obtaining the equalization factor by means of the ratio between the mean of the reference cycle and the mean of the current cycle.

7. Method according to any one of the preceding claims, wherein the masking distance corresponds to the distance between the radar sensor (1) and a point within the field of view (2), the point within the field of view (2) being interposed between the radar sensor (1) and a region of interest (3) in which the radar sensor (1) detects and signals the presence of targets (T).

8. Method according to any one of the preceding claims, wherein the matrix of variable-range profiles (5) comprises rows and columns, wherein each row comprises variable-range profiles related to a single transmission antenna and distinct reception (RX) antennas and each column comprises variable-range profiles related to a single reception (RX) antenna and distinct transmission (TX)antennas, or each column comprises variable-range profiles related to a single transmission (TX) antenna and distinct reception (RX) antennas and each row comprises variable-range profiles related to a single reception (RX) antenna and distinct transmission (TX) antennas.

9. Method according to any one of the preceding claims, wherein a plurality of transmission (TX) antennas and a plurality of reception (RX) antennas are grouped into corresponding transmission and reception arrays, the transmission and reception arrays being arranged according to linear spatial distributions.

10. Method according to claim 9, wherein the transmission (TX) antenna array is arranged perpendicularly with respect to the reception (RX) antenna array.

11. Method according to any one of the preceding claims, further comprising detecting, in the current acquisition cycle, the presence of targets (T), within one or more regions of interest (3) within the field of view (2), wherein detecting the presence of targets (T) provides for determining the position of the target (T) with a higher angular resolution with respect to the fixed-range signatures.

12. Method according to claim 11, wherein:
- detecting the presence of targets (T) comprises calculating fixed-range signal matrices for a plurality of distances of interest in the regions of interest, and determining a direction angle of each target (T) by means of a super-resolution algorithm, said super-resolution algorithm comprising generating a resolution-augmented matrix obtained by increasing a resolution of each current fixed-range intensity matrix and applying a Fourier transform on each resolution-augmented matrix, and
calculating each current fixed-range signature comprises, for each masking distance (Dm), directly applying the Fourier transform to the respective fixed-range intensity matrix, without increasing its resolution.
